(19) **Europäisches Patentamt**

**European Patent Office**

**Office européen des brevets**

(11) **EP 0 707 883 B1**

(12) **EUROPEAN PATENT SPECIFICATION**

(45) Date of publication and mention
of the grant of the patent:
**31.05.2000 Bulletin 2000/22**

(51) Int Cl.7: **B01D 53/94**

(21) Application number: **95307075.2**

(22) Date of filing: **05.10.1995**

(54) **Catalyst and method for purifying exhaust gases**

Katalysator und Verfahren zum Reinigen von Abgasen

Catalyseur et méthode pour la purification de gaz d'échappement

(84) Designated Contracting States:
**AT BE CH DE DK ES FR GB GR IE IT LI LU MC NL PT SE**

(30) Priority: **06.10.1994 JP 27820994**

(43) Date of publication of application:
**24.04.1996 Bulletin 1996/17**

(73) Proprietor: **N.E. CHEMCAT CORPORATION**
**Minato-ku, Tokyo 105 (JP)**

(72) Inventors:
• **Ito, Takashi**
**Ichikawa-shi, Chiba 272 (JP)**
• **Kosaki, Yukio**
**Ichikawa-shi, Chiba 272 (JP)**

(74) Representative: **Davies, Jonathan Mark**
**Reddie & Grose**
**16 Theobalds Road**
**London WC1X 8PL (GB)**

(56) References cited:
**EP-A- 0 602 865       GB-A- 1 384 248**
**US-A- 5 128 306**

## Description

### FIELD OF THE INVENTION

The present invention relates to a two-step catalyst system and method using that catalyst system for purifying exhaust gases which are exhausted from internal combustion engines, such as a lean-burn engine, a 2-stroke engine and a diesel engine which are driven at higher ratio of air to fuel (lean-burn air to fuel ratio), and from boilers, gas turbines and so on. These exhaust gases typically contain excess oxygen and nitrogen oxides.

### BACKGROUND OF THE INVENTION

Currently to prevent earth-warming phenomena, the merits of internal combustion engines of the lean-burn type, for example gasoline lean-burn engines, diesel engines and so on, are considered. However, because the technology for the removal of nitrogen oxides (NOx) in the presence of excess oxygen in the exhaust gases emitted by such internal combustion engines has not been well-developed, these internal combustion engines have not been extensively used. Previously, nitrogen monoxide (NO) and nitrogen dioxide ($NO_2$) within nitrogen oxides (NOx) have been believed to cause acid rain and photochemical smog, while nitrous oxide ($N_2O$) had been thought to not to contribute to such acid rain and photochemical smog. Currently, however, it is thought that it may be at least possible that nitrous oxide causes earth-warming effects and destruction of the ozonosphere, and in the future it will be necessary to control exhausting of such nitrous oxide.

As methods of purifying exhaust gases containing nitrogen oxides (NOx), the following two methods have been reported: (1) a three-way catalyst (TWC) in which internal combustion engines are operated at the ratio of air to fuel at a near stoichiometric amount, and oxidation of carbon monoxide (CO) and hydrocarbon (HC) and reduction of nitrogen oxides (NOx) in exhaust gases are simultaneously performed; (2) selective reduction method of reducing nitrogen oxides (NOx) in exhaust gases with near stoichiometrical amount of ammonia where ammonia is to added to the exhaust gases stream, and nitrogen oxides (NOx) is reduced by catalysts, such as $V_2O_5/TiO_2$ etc.

Certain catalysts which cause direct catalytic decomposition of nitrogen oxides (NOx) are known. For example: 1) Cu ion-exchanged ZSM-5 (Japanese Patent Laid-Open No. Shou 60-125250 (85/125250)), 2) certain perovskite catalysts containing Cu or Co (Teraoka et al., *Chem. Lett.,* 1 (1990); Shimada et al., *Chem, Lett.,* 1797 (1988)) and 3) certain Pd/MgO catalyst (Ogata et al., *Appl, Catal.*, **65**:L11 (1990)).

In the context of purifying exhaust gases containing excessive oxygen, certain catalysts also have been reported for selective reduction of nitrogen oxides (NOx) in which remaining hydrocarbons (HC) in exhaust gases can be used as reducing agent. For example, (1) methods of using zeolite catalysts, metallosilicate catalysts or alumina phosphate catalysts ion-exchanged with transition metals such as Cu, Co and so on (U.S. Patent No. 4,297,328, Japanese Patent Laid-Open No. Shou 63-100919 (88/100919), Japanese Patent Laid-Open No. Hei 3-127628 (91/127628), Japanese Patent Laid-Open No. Hei 3-229620 (91/229620), Japanese Patent Laid-Open No. Hei 1-112488 (89/112488)), or (2) methods of using certain catalysts which contain certain noble metals, such as Pd, Pt, Rh etc., loaded on a porous material carrier, such as zeolite, alumina, silica, titania etc., (Japanese Patent Laid-Open No. Hei 3-221143 (91/221143), Japanese Patent Laid-Open No. Hei 3-221144 (91/221144)), have been reported.

To attempt to remedy the shortcomings of such single catalyst systems and provide more effective purification of exhaust gases, certain multi-step combination catalysts have been reported.

For example, (1) Cu ion-exchanged zeolite catalyst (NOx reduction catalyst) at the upstream + Pt/alumina catalyst (HC and CO oxidation catalyst) at the downstream (Japanese Patent Laid-Open No. Hei 1-139145 (89/139145), Japanese Patent Laid-Open No. Hei 4-367713 (92/367713)), (2) Au/Fe₂O₃ (CO oxidation catalyst) at the upstream + Cu/crystalline silicate (NOx reduction catalyst) at the downstream (Japanese Patent Laid-Open No. Hei 4-341346 (92/341346)), (3) Pd or Rh/alumina (CO oxidation catalyst) at the upstream + Pt/alumina (NOx reduction catalyst) at the downstream (Japanese Patent Laid-Open No. Hei 5-7737 (93/7737)), (4) Ni or Ru/alumina (HC reforming catalyst) at the upstream + Pt/alumina (NOx reduction catalyst) at the downstream (Japanese Patent Laid-Open No. Hei 5-76776 (93/76776)) or (5) Pt, Rh or Pd/alumina (NO oxidation catalyst) at the upstream + Cu/zeolite ($NO_2$ reduction catalyst) at the downstream (Japanese Patent Laid-Open No. Hei 5-96132 (93/96132)), such two-step combination catalysts were reported.

These above mentioned methods each have some problems. For example, with respect to the three way catalyst of the above noted (1), the efficiency of NOx purification is extremely low at higher ratios of air to fuel. The ammonia reduction of the above noted (2) is also problematic because of the equipment required with use of poisonous gaseous ammonia.

Moreover, with respect to the NOx selective reduction catalyst of (1), the temperature range of effective NOx purification is relatively high at higher than 350°C, and in exhaust gases containing water at higher than 650°C serious thermal deterioration of the catalyst can occur. With respect to a catalyst such as the above mentioned (2), at relatively low temperatures of 200°C to 300°C NOx is reduced, but the effective temperature range is narrow and a considerable amount of $N_2O$ can be produced as partial reduction product of NOx. Accordingly, these catalysts are generally not suitable for practical use.

Further, the above mentioned NOx decomposition catalyst 1) is said to have an activity at 300°C to 500°C, but in the presence of water ($H_2O$) and oxygen ($O_2$) the catalyst can become deactivated. The above mentioned catalysts 2) and 3) also have problems such as that the effective temperature range of 700°C to 800°C is too high, rendering the catalysts generally not suitable for practical use.

And with respect to the above mentioned methods (1) to (5) of multi-step combination catalysts, since in principle the efficiency of NOx elimination depends on the selective reduction ability of NOx with CO and/or HC, it is necessary that a certain amount of CO, HC and/or $H_2$ is left in the exhaust gases as reducing agents. Therefore, perfect oxidation of CO and/or HC is not achieved.

Additionally, the above mentioned systems may not be capable of meeting more stringent exhaust gas control standards than current standards, including such standards that may be effective in near future (e. g. HC control value of ULEV in California, USA). Moreover, the catalysts mentioned in (3) and (4) above have a problem of producing $N_2O$ as a by-product.

## SUMMARY OF THE INVENTION

The present invention has overcome such problems of the prior art. The present invention provides a novel and effective catalyst system and method for purifying of exhaust gases containing a reductive component comprising hydrocarbon, nitrogen oxides and oxygen in excess of a stoichiometrical amount. The catalyst system and method of the invention achieves a high level of denitrification at a wide range of temperature, including from 200°C to 500°C, can achieve high levels of purification of HC and CO at more than 200°C, and produces no or at least substantially no $N_2O$ as a by-product.

## BRIEF DESCRIPTION OF THE DRAWINGS

Figure 1 is a graph showing the purifying ability of exhaust model gas of lean-burn engines as obtained in Comparative Sample 1.

Figure 2 is a graph showing the purifying ability of exhaust model gas of lean-burn engines as obtained in Comparative Sample 2.

Figure 3 is a graph showing the purifying ability of exhaust model gas of lean-burn engines as obtained in Comparative Sample 3.

Figure 4 is a graph showing the purifying ability of exhaust model gas of lean-burn engines as obtained in Example 1 of the present invention.

Figure 5 is a graph showing the purifying ability of exhaust model gas of lean-burn engines as obtained in Comparative Sample 4.

Figure 6 is a graph showing the purifying ability of exhaust model gas of lean-burn engines as obtained in Example 2 of the present invention.

Figure 7 is a graph showing the purifying ability of exhaust model gas of lean-burn engines as obtained in Example 3 of the present invention.

## DETAILED DESCRIPTION OF THE INVENTION

The methods of the invention include purifying exhaust gases which comprise a reduction component containing hydrocarbon and greater amount of oxygen and nitrogen oxides than the stoichiometrical amount needing to perfectly oxidize all the reduction component. The methods include placing at least two catalyst zones along side, or in the flow path, of the exhaust gas stream. The first catalyst zone (i.e. the upstream catalyst area) contains a HC oxidation catalyst having a high perfect oxidation ability of HC. The second catalyst zone, downstream from the first zone (i.e. downstream with respect to the flowpath of the exhaust gases and therefore contacts the exhaust gases after such gases contact the first catalyst zone), contains one or more NOx decomposition catalysts which decompose NOx to $N_2$ and $O_2$ in the presence of a lower concentration of HC than the concentration of HC present in the exhaust gas at the first catalyst area, or in the substantial absence of HC.

The present inventors have studied the selective reduction reaction of NOx by HC in lean-burn engine exhaust model gases in the presence of platinum catalyst on carrier. It has been found that a certain platinum catalyst on a carrier provide the higher conversion of NOx under the lower concentration of HC, contrary to prior reports. It was also found that the highest conversion of NOx was achieved in the absence of HC (i.e. zero or essentially zero HC concentration), and that $N_2O$ was not produced as a by-product in such absence of HC. According to these findings, methods to purify exhaust gases containing high ratios of oxygen and which achieve high levels of removal of CO and HC, high levels of removal of NOx and produce low levels of $N_2O$ have been provided, and the present invention has been accomplished.

As used herein, the term perfect oxidation reaction of HC means a reaction producing only $CO_2$ and $H_2O$ from HC and $O_2$ without producing alcohol, aldehydes, ketone, CO, etc. Such a perfect oxidation reaction is distinct from a partial oxidation reaction which produces alcohol, aldehyde, ketone, CO and so on.

The catalyst system for purifying exhaust gases of the present invention is a catalyst system for purifying exhaust gases containing a reductive component comprising hydrocarbon, nitrogen oxides and oxygen in excess of the stoichiometrical amount to perfectly oxidize all the reductive component. The catalyst system includes locating a hydrocarbon oxidation catalyst having high perfect oxidation activity of hydrocarbon at a first zone in the exhaust gases' flow path, and a NOx decomposition catalyst that can decompose nitrogen oxides to nitrogens and oxygens at a second zone in the exhaust gases, downstream in the exhaust gases' flow path from the first zone.

With respect to the catalyst system and the method for purifying exhaust gases of the present invention, the catalyst in the first zone (the upstream zone in the exhaust gases) can achieve perfect oxidation for hydrocarbons to $CO_2$ and $H_2O$, more preferably can achieve high or perfect oxidation for hydrocarbon to $CO_2$ and $H_2O$. The conversion HC in the first catalyst zone is preferably about 50% or more, more preferably about 90% or more (expressed as volume volume %; gas compositions expressed herein as volume % unless otherwise indicated). If the first zone catalyst does not have high perfect oxidation ability for hydrocarbon, a considerable amount of HC is not oxidized and such HC leaves the first zone catalyst, or CO, a partial oxidization product of HC, is produced. Such remaining reductive compound can negatively impact the activity and selectivity of the NOx decomposition catalyst located at the second zone downstream in the exhaust gases' flow path from the first zone.

Especially, in the case of using platinum catalyst on carrier as the second zone catalyst, when a considerable amount of HC leaves the first zone catalyst without oxidation in the exhaust gases containing the higher amount of oxygen, partial reduction of NOx to $N_2O$ by HC becomes a main reaction at the second zone catalyst. Therefore this is not preferable.

CO in exhaust gases is an intermediate produced by partial oxidation of HC. Generally a catalyst having high perfect oxidation ability for HC necessary promotes the oxidation of CO to $CO_2$. Especially, the catalyst having high oxidation activity of HC necessarily has high oxidation activity of CO in the exhaust gases that contain an excess amount of oxygen. Such HC oxidation catalyst at the first catalyst zone is preferable to have lower convertive (oxidation/reduction) activity of NO. In the presence of excess amount of oxygen, NO reacts with $O_2$ and is oxidized to $NO_2$, or NO is partially reduced by HC and $N_2O$ is produced. Because $NO_2$ is more poisonous to humans than NO, and $N_2O$ is more difficult to decompose than NO, the first zone catalyst preferably does not cause NO to be oxidized to $NO_2$, and does not cause NO to be reduced to $N_2O$ by the HC oxidation catalyst to the largest extent possible.

To achieve such perfect oxidation activity of CO and HC at a wide range of exhaust gases temperatures, the catalyst preferably has superior low temperature activity. Further, in case of use for purifying exhaust gases in internal combustion engines, such as lean-burn engines, diesel engines and so on, it is preferable to place the first zone catalyst near the exhaust manifold to improve the removal ratio of CO and HC to a high level as may be required under future emission standards as discussed above. Thus, the first zone catalyst preferably has high temperature thermal resistance, including thermal resistance (i.e. does not decompose during regular use) up to about 900°C.

The first zone catalysts are those which comprise at least one metal selected from the group consisting of platinum, palladium, rhodium and iridium in the presence of gold loaded on a refractory porous metal oxide carrier, particularly to achieve high perfect oxidation ability of HC and to control NO conversion activity.

Exemplary carriers of such loaded noble metal catalyst include refractory inorganic carriers, for example alumina, silica, titania, zirconia, silica-alumina, titania-silica, aluminosilicate, aluminophosphate, silicoaluminophosphate, zirconiumphosphate, siliconcarbide, etc.; and more preferable are the refractory porous metal oxide carriers, such as activated alumina, silica, silica-alumina.

The amount of the noble element loaded on the first zone catalyst can suitably vary, and is generally about 0.1% to 5.0% by weight to gross weight of the catalyst, preferably about 0.5% to 2.0% by weight.

In case of multi-components of loaded noble metal catalyst, total loaded amount of the noble metal is 0.1% to 5.0% by weight, and is preferably 0.5% to 2.0% by weight. If the loaded amount is too small, HC oxidation activity may not be sufficient. If the loaded amount is too large, the dispersion degree of the noble metal may decrease. In these cases, the light-off temperature of HC oxidation reaction increases, HC conversion ratio decreases and the extent of the NO conversion reaction tends to increases, which is less desirable. In case of a loaded catalyst containing elements of the platinum group and gold, the ratio of loaded amount of elements of the platinum group to gold is suitably about 5:1 to 100:1 by weight. If the loaded amount of gold is too large, HC oxidation activity can be prevented or inhibited, and if the loaded amount of gold is too small, control of NO conversion activity may be prevented or inhibited.

The catalysts may be shaped as desired, or the catalysts may be coated and used on pre-shaped refractory support substrate. A first zone catalyst may be constructed with a housing into which the HC catalyst of any shape can be charged or loaded. The shape of the first catalyst is not limited and for example beads, pellets, rings, honeycomb and/or foam can be used. Preferred is a first zone catalyst which comprises the catalyst itself coated onto a honeycomb-shaped monolith support substrate having many open channels along the exhaust gases' flow and formed from refractory ceramics, such as cordierite, mullite, siliconcarbide, etc., stainless steels, etc. Such a catalyst structure can increase contact area of the catalyst and exhaust gases with control of pressure drop.

The second zone catalyst of the method for purifying exhaust gases of the present invention, which the exhaust gases connect after CO and HC of the gases have been oxidized upstream in the exhaust gases' flow on the first zone catalyst, is not particularly limited, except that the catalyst should promote catalytic NOx decomposition under a lowered HC concentration or in the substantial absence of HC and in the presence of excess oxygen. The NOx purification ratio (defined below) is suitably at least about 20%, preferably 30% or more, more preferably 40% or more.

Exemplary of such second zone NOx decomposition catalyst in the presence of excess oxygen include catalysts which comprise at least one metal selected from group consisting of platinum, rhodium, iridium, preferably loaded on a refractory inorganic support. The NOx decomposition activity may be raised by the carrier used and the manner in which the carrier is loaded with active metal. Especially preferred is a second zone catalyst comprising platinum loaded on porous metal oxide carriers such as alumina, silica, titania, zirconia, silica-alumina etc.

The loaded amount of noble metal element of the second area catalyst is generally about 0.5% to 15% by weight to gross weight of the catalyst, preferably, about 3% to 10% by weight. If the loaded amount of noble metal is too small, NOx decomposition activity may not be sufficient, and if the loaded amount of noble metal is too large, NOx decomposition activity may not increase in proportion to increase of the loaded amount, which is less preferred.

With respect to the second zone catalyst, platinum loaded on active alumina carrier at the ratio of about 3% to 10% by weight is especially preferable. However, in cases where the amount of HC with respect to NOx is high in the exhaust gases that contact the second zone loaded noble catalyst, especially loaded platinum catalyst, the reduction of NOx by HC can occur and the production of $N_2O$ can increase. In the case of a sufficiently low HC concentration with respect to NOx or in the substantial absence of HC, and where the exhaust gases are in the temperature range of 200°C to 500°C at the inlet or entrance (upstream side) of the second catalyst zone, the NOx decomposition reaction takes precedence over the reduction reaction of NOx by HC.

The upper limit of the ratio of the HC concentration (methane reduced concentration of HC, referred to herein as THC) to NOx concentration (THC/NOx) in the exhaust gases so that the NOx decomposition reaction is promoted may be determined depending on the types of HC in the exhaust gases or on reaction conditions. Preferably the ratio of THC to NOx is less than 1, more preferably the ratio THC/NOx is less than 0.3.

However, the method of the present invention is not limited to the above range of the ratio of THC to NOx, particularly if only exhaust gases, having lower HC concentration than the HC concentration of the exhaust gases at the inlet (upstream portion) of the first zone catalyst, contact the second zone catalyst so that NOx decomposition activity of the second catalyst area may be enhanced and the effect of the method of the present invention can be achieved.

The catalyst of the second zone may be formed itself in a certain shape, or the catalyst may be coated onto and used on a pre-shaped refractory support substrate. A second zone catalyst may be constructed with a housing into which the NOx decomposition catalyst of any shape can be charged or loaded. The shape of the second zone catalyst is not limited and for example beads, pellets, rings, honeycomb and/or foam can be used. Preferred is a second zone catalyst which comprises the catalyst itself coated onto a honeycomb-shaped monolith support substrate having many open channels to permit the exhaust gases' flow therethrough and formed refractory ceramics such as cordierite, mullite, siliconcarbide etc., stainless steels, etc. Such a catalyst structure can increase contact area of the catalyst and exhaust gases with control of pressure drop.

If desired, the first and second zone catalysts can be coated onto the same brick or unit of honeycomb substrate with separation of the respective zones of application of the first and second zone catalysts so that the first zone catalyst is coated onto an upstream area or zone of the honeycomb structure upon placement of the structure in an exhaust gas flowpath, and the second zone catalyst is coated onto a downstream area of the same honeycomb structure upon placement of the structure in an exhaust gas flowpath.

The method of the present invention for purifying the exhaust gases containing reductive component comprising hydrocarbon, nitrogen oxides and excess amount of oxygen than the stoichiometrical amount to perfectly oxidize all the reductive component, is the method in which said exhaust gases contact with HC oxidation catalyst having higher perfect oxidation ability of HC at the first zone in the gas flow, and secondly the gases contact with NOx decomposition catalyst which decomposes NOx to $N_2$ in the second zone downstream in the exhaust gases flowpath with respect to the first zone catalyst and in the presence of a lower concentration of HC relative to the concentration upstream at the first zone catalyst, or in the substantial absence of HC. By the purifying method of the present invention, CO and HC in the exhaust gases containing excess oxygen are perfectly oxidized at higher conversion and removed and NOx is decomposed and removed with no or essentially no production of $N_2O$ as a by-product. Use of the catalysts system of the invention preferably provides a $N_2O$ production ratio (defined below) of 20% or less, more preferably about 10% or less, still more preferably a $N_2O$ production ratio of about 7% or less.

The inlet gas temperature of the first zone and second zone catalyst (i.e. the temperature of the exhaust gas as it contacts the first and second zone catalysts respectively) has particular no limitation, except the inlet gas temperature should be sufficient to perfectly oxidize HC and CO, control NOx conversion reaction for the first zone catalyst and effectively decompose NOx (i.e. essentially no production of $N_2O$ as a by-prod-

uct) for the second zone catalyst, respectively.

Preferably, the inlet gas temperature of the first zone catalyst is higher than 200°C and lower than 700°C. If the temperature is too low, HC perfect oxidation activity make not be sufficient, HC concentration in exhaust gases supplied to the second zone catalyst may increase, and the selectivity of NOx decomposition reaction in the second zone catalyst may decrease. If the inlet gas temperature of the first zone catalyst is too high, aggregation (sintering) of the catalytic active component can occur and the higher activity of HC oxidation may be inhibited.

The inlet gas temperature of the second zone catalyst is preferably from about 150°C to 450°C, more preferably the temperature is from about 200°C to 400°C. If the inlet temperature is too low, NOx decomposition reaction may be inhibited, and if it is too high, NOx removal ratio may decrease. Generally, other than any exothermal reaction heat generated on the first catalyst zone, the further exhaust gases have flowed from a gas generating source the cooler the exhaust gases will be, and the inlet gas temperature of the second zone catalyst can be made lower than the inlet gas temperature of the first zone catalyst for the same exhaust gas. The second zone catalyst may be placed directly behind the first zone catalyst or may be placed at a certain distance from the first zone catalyst. The positioning and attachment of the first and second zone catalysts in the exhaust gas flow path may be selected to achieve the most effective result.

Thus, both the first and second catalyst zones can be positioned in a single housing placed in the exhaust gas flow path. Alternatively, two or more housings can be placed in the exhaust gas flow path, a first upstream housing containing the first catalyst zone and a second downstream housing containing the second catalyst zone.

With respect to the exhaust gas purifying methods of the present invention, gas space velocity of exhaust gases which contact with the first zone catalyst and the second zone catalyst have no particular limitation, and generally range from about 5,000/hr to 200,000/hr. Preferably the gas space velocity of exhaust gases which contact with the first zone catalyst is from about 30,000/hr to 150,000/hr, and the gas space velocity of the second zone catalyst preferably is from about 10,000/hr to 100,000/hr. If the gas space velocity is too small, a larger capacity of catalyst may be needed, which is less desirable. If the gas space velocity is too large, the HC light-off temperature of the first zone catalyst shifts to the higher temperature side, the HC conversion ratio may decrease, and the NOx conversion ratio of the second zone catalyst may also decrease, which is less desirable. The ratio of space velocity of the first zone catalyst to that of the second zone catalyst ($SV_1/SV_2$) also is not particularly limited, and preferably $SV_1/SV_2$ is less than 10 and more than 0.1, and more preferably $SV_1/SV_2$ is less than 3 and more than 0.5.

As used herein the terms NOx conversion ratio and $N_2O$ producing ratio are defined to means as follows:

$$\text{NOx conversion ratio} = \frac{A - B}{A} \times 100\%$$

$$N_2O \text{ producing ratio} = \frac{C \times 2}{A} \times 100\%$$

wherein A, B and C of the above formulae are defined to mean as follows:

A: inlet NOx concentration of catalyst layer
B: outlet NOx concentration of catalyst layer
C: outlet $N_2O$ concentration of catalyst layer

Also, the NOx purification ratio is defined to mean herein the difference between the NOx conversion ratio and the $N_2O$ producing ratio, i.e.: NOx purification ratio = NOx conversion ratio - $N_2O$ producing ratio.

Generally, in the exhaust gases of internal combustion engines driven at higher ratios of air to fuel, hundreds to thousands parts per million (PPM) of CO and hundreds to thousands PPM of HC is present with about 3% to 15% of $O_2$ and hundreds to thousands PPM of NOx. Consequently such exhaust gases contact the inlet (upstream area) of a first zone HC oxidation catalyst at about 200°C to 700°C, and such exhaust gases contact downstream therefrom the NOx decomposition catalyst of the second zone at about 150°C to 450°C at the inlet (upstream area) of that second zone catalyst, and a high CO and HC conversion ratio of 95% to 99.5%, and high NOx removal ratios of 30% to 70% are achieved as a whole.

Because the oxidation catalyst of the first zone is perfect oxidation catalyst of HC, it can increase the purification ratio of CO and HC to the same level as or higher level than the prior three-way catalyst, and it can be easier to increase heat resistance at high temperature. Additionally, the NOx decomposition catalyst of the second zone displays high NOx decomposition ratio under the condition that concentration of reductant of HC etc. is at a sufficiently low level such as exhaust gases after passing the first zone catalyst, or under in the substantial absence of HC. Hence, the method of purifying of the present invention is extremely effective method in respect of utilizing combination of advantages of two types of catalyst which promote different types of reactions respectively, and the method of the invention has great utility to purify exhaust gases of lean-burn engines.

All documents mentioned herein are incorporated herein by reference.

The invention will now be described with reference to several samples, examples, comparative examples thereof. It is to be understood that the following examples et al. are not intended to limit the scope of the present invention.

## SAMPLE 1

Preparation of honeycomb covered with Pt-Au loaded alumina catalyst (1)

(a) 100g of activated alumina which is 150m$^2$/g of BET specific surface area and 30 $\mu$m of average particle diameter was stirred in a mixer and platinum hydroxide amine solution containing 1.0g of platinum was gradually added to the mixer, and that mixture was homogeneously dispersed and loaded. Then 20ml of 25% acetic acid solution was gradually added to the mixture and 1 % Pt-loaded alumina powder was obtained. After drying the thus obtained powder at 105°C for 16 hours, the powder was placed in an electric furnace and calcined in the air at 500°C for 2 hours. Then chloroauric acid (HAUCl$_4$) deionized water solution containing 0.1g of gold was loaded by the water absorption method to the calcined powder and that mixture was calcined under the same conditions (i.e. air/ 500°C/2 hours), and the calcined sample was then reduced at 700°C for 2 hours in hydrogen stream, and 1% Pt-0.1% Au/Al$_2$O$_3$ catalyst (1) was thereby obtained.

(b) 100g of powder catalyst (1) obtained in Sample 1 (a), 12.5g of alumina sol (20% by weight of alumina) and 25g of deionized water were put into a ball mill pot and kneaded for 16 hours to provide a slurry. A corepiece with 2.54 cm of diameter and 6.35 cm of length scooped out from 400 cell commercially available (N-CORE COMPANY) cordierite-honeycomb was dipped in this slurry and removed. Excess slurry was removed by air-blowing and the honeycomb was dried. The honeycomb was then calcined at 500°C for 30 minutes to thereby provide a catalyst (1) honeycomb, with the honeycomb coated with 100g of solid per honeycomb 1L (liter) by dry conversion.

## SAMPLE 2

Preparation of honeycomb coated with Pd-Au loaded alumina catalyst (2)

1.5g of sodium carbonate was added to 3L of deionized water and stirred and dissolved. 100g of the same activated alumina used in Sample 1 (a) above was added to the stirred sodium carbonate solution to obtain a homogeneous slurry. Then, 100ml of deionized water solution containing sodium chloropalladate containing 1.02g of Pd and chloroauric acid containing 0.1g of Au were added to the slurry over a 30 minute period, the slurry was heated to 55°C, 120ml of deionized water solution containing 5.5g of 30% sodium formate solution was added to the slurry, and after the slurry was maintained at 55°C for 1 hour, it was cooled, filtered and washed, the resultant cake was dried at 105°C, and 1.0% Pd-0.1% Au/Al$_2$O$_3$ catalyst (2) was obtained. The catalyst was treated in the same way as Sample 1(b) above and a honeycomb structure coated with the catalyst (2) was prepared.

## SAMPLE 3

Preparation of honeycomb coated with Pt-Rh loaded alumina catalyst (3)

100g of the same activated alumina as used in Sample 1 was placed in a mixer, and during stirring of the alumina 25ml of platinum hydroxide amine solution containing 1.7g of platinum was gradually added to the stirred mixture. Then 15ml of rhodium nitrate solution containing 0.34g of Rh was added to the mixture, and then 8.3ml of 25% acetic acid solution was gradually added to the mixture, and the mixture was then dried to thereby provide 1.7% Pt-0.34% Rh loaded alumina powder catalyst (3) (ratio by weight of Pt to Rh = 5:1). That dried catalyst (3) was coated onto a honeycomb structure of the same type as described above with respect to Sample 1(b) (i.e. 400 cell cordierite-honeycomb) and dried in the same manner as Sample 1(b), and the coated honeycomb structure was calcined in the air at 500°C for 1 hour to thereby provide the honeycomb structure coated with the catalyst (3), which is a simple model for the conventional three-way catalyst (TWC).

## SAMPLE 4

Preparation of honeycomb coated with Pt loaded-alumina catalyst (4)

1.88ml of glacial acetic acid was added to 2L of deionized water, 100g of the same activated alumina as used in Sample 1(a) above was added to the mixture, and during stirring of the mixture 100ml of platinum hydroxide amine solution containing 5.26g of platinum was added to the stirred mixture over a period of 30 minutes. The mixture was then heated from room temperature to 95°C over 1 hour, and 125ml of deionized water solution containing 1.22ml of formic acid was added to the mixture kept at 95°C over a period of 30 minutes. After the addition was complete, the mixture was maintained at 95°C for 30 minutes, and then cooled, and the slurry was filtered and washed. After drying the thus obtained catalyst at 105°C for 16 hours, 5% Pt/ Al$_2$O$_3$ catalyst (4) was obtained. The catalyst (4) was then coated onto a honeycomb as described for Sample 1(b) above (i.e. 400 cell cordierite honeycomb) and the coated structure dried. The coated structure was then calcined in the air at 700°C for 2 hours, and the honeycomb structure coated with the catalyst (4) was thus prepared.

## COMPARATIVE SAMPLE 1

Transaction of exhaust model gas of lean-burn engines by only HC oxidation catalyst (1)

The honeycomb coated with Pt-Au loaded alumina catalyst (1) was packed in stainless steel reaction tube having internal diameter of 30 mm with winding glass wool on the side of the honeycomb core for preventing gas blowing. As a model of exhaust gas emitted by a gasoline lean-burn engine, a mixed gas (model gas G-1) containing 1,000 ppm (all gas compositions expressed herein as volume % unless otherwise indicated) of NO, 1,500 ppm of propylene as HC, 1,000 ppm of CO, 7.5% of $O_2$, 10% of $CO_2$, 10% of $H_2O$ and the balance being $N_2$ was flowed into the reaction tube at a flow rate of 16.1 L/min (SV 30,000/hr). The inlet gas temperature of the catalyst layer was successively raised from 100°C to 500°C at a rate of 30°C/minute. The concentration of NOx, CO, HC and $N_2O$ of the gases exiting from the catalyst layer were measured by a NOx measuring instrument, a CO measuring instrument, a HC measuring instrument and a $N_2O$ measuring instrument respectively. The conversion ratio of NOx, CO and HC and the production ratio of $N_2O$ with respect to the inlet gas temperatures of the catalyst layer (light-off performance) was assessed.

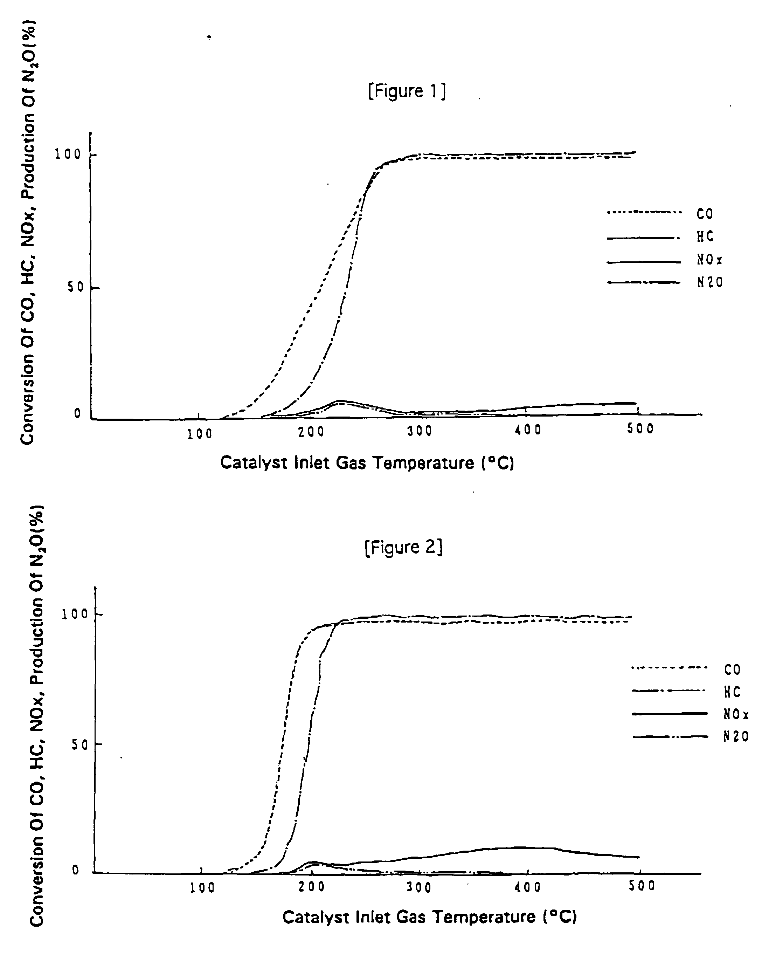

The light-off performance of NOx, CO, HC and $N_2O$ on the assessment of the model gas of Comparative Sample 1 is shown in Figure 1 of the Drawings. The catalyst (1) showed high conversion ratio of CO, HC of more than 95% at inlet temperatures of higher than 280°C; however, the catalyst showed less than 7% of the conversion ratio of NOx at temperature ranges of from 100°C to 500°C. The results showed that the catalyst (1) had high perfect oxidation ability of CO and HC, but caused almost no reduction of NOx by HC. Hence, catalyst (1) hardly produced $N_2O$, with less than 6% of the producing ratio of $N_2O$. Additionally, as the light-off performance of NO was determined separately using a NO measuring instrument under conditions of the same model gas, about the same curve of light-off of NO as that of NOx shown in Figure 1 was obtained. Namely, NO was hardly oxidized to $NO_2$ by the catalyst (1).

## COMPARATIVE SAMPLE 2

Transaction of exhaust model gas of lean-burn engines by only HC oxidation catalyst (2)

The light-off performance of NOx, CO, HC and $N_2O$ were assessed in the same way as described at Comparative Sample 1 except that the honeycomb coated with the catalyst (2) was used and packed in the reaction tube in place of the honeycomb coated with the catalyst (1).

The results are shown in Figure 2 of the Drawings. The results show the catalyst (2) was a catalyst that exhibited high conversion ratio of CO, HC of more than 98% at inlet temperature of the catalyst of higher than 220°C to 500°C, but showed less than 11% of the conversion ratio of NOx at a range of temperature from 100°C to 500°C, and did not convert NOx but effectively oxidized CO and HC, and hardly produced $N_2O$. Also, other assessments through use of a NO measuring instrument showed that the catalyst (2) hardly oxidized NO to $NO_2$.

## COMPARATIVE SAMPLE 3

Transaction of exhaust model gas of lean-burn engines by only TWC (3)

The light-off performance of NOx, CO, HC and $N_2O$ were assessed in the same way as described at Comparative Sample 1 except that the honeycomb coated with the catalyst (3) was used and packed in the reaction tube in place of the honeycomb coated with the catalyst (1).

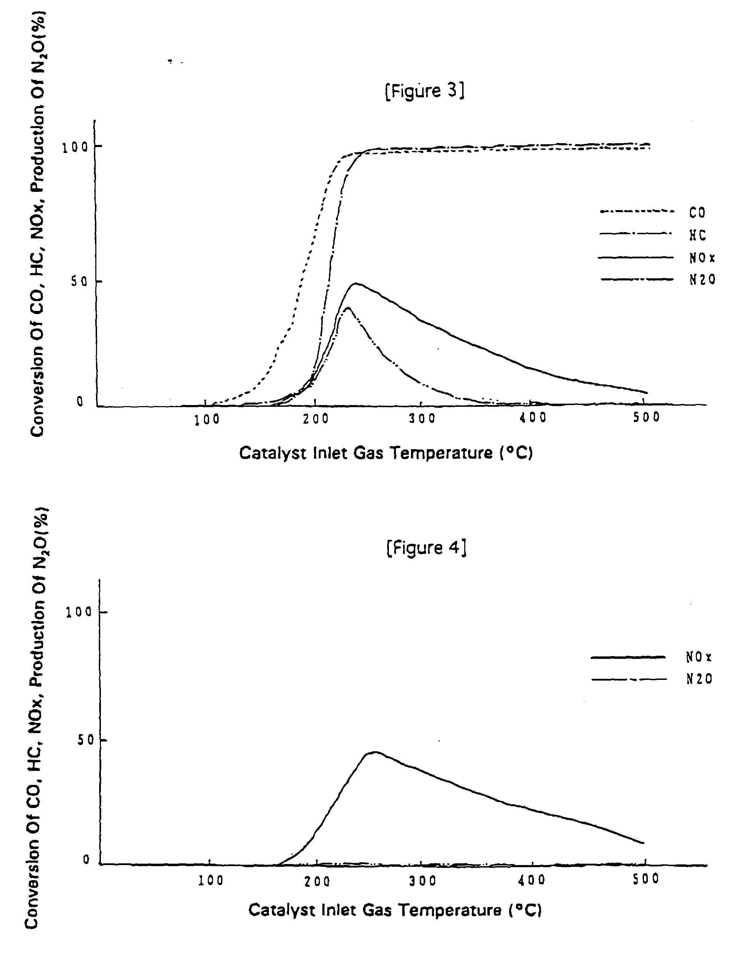

The results are shown in Figure 3 of the Drawings. The catalyst (3) showed high conversion ratio of CO, HC of more than 95% at entrance temperatures of higher than 250°C, and achieved NOx converting reaction at the same time, and achieved a maximum NOx conversion ratio of 50% at nearly 240°C. However, the catalyst (3) achieved $N_2O$ production ratio of 38% at maximum, converted nearly 70% to 80% of converted NOx to $N_2O$, and showed remarkable low NOx purification ratio at temperatures greater than 350°C. Namely, the result showed that a mere loaded noble metal catalyst, such as the prior TWCs (three way catalysts), caused partial reduction of NO to $N_2O$ by HC at the same time as oxidation of CO and HC, and had an imperfect purifying ability of NOx.

## EXAMPLE 1

Transaction of exhaust model gas of lean-burn engines by NOx decomposition catalyst (4)

The dependence of NOx conversion ratio and $N_2O$ production ratio on the inlet gas temperature were assessed in the same way as described at Comparative Sample 1 except for using the honeycomb coated with the catalyst (4) in place of the honeycomb coated with the catalyst (1) of Comparative Sample 1 and using a mixed gas (model gas G-2) containing 1,000 ppm of NO, 0 ppm of propylene as HC, 0 ppm of CO, 7.5% of $O_2$, 10% of $CO_2$, 10% of $H_2O$ and the balance being $N_2$ in place of the model gas G-1.

The results are shown in Figure 4 of the Drawings. The catalyst (4) showed a preferable conversion ratio of NOx of more than 40% at wide range of temperature from 280°C to 400°C, generated hardly $N_2O$, and effectively made NOx harmless. The model gas G-2 is a model gas system with CO and HC removed from the model gas G-1 as described above by the perfect oxidation, and can be regarded as an outlet gas of a catalyst after the model gas G-1 has contacted HC oxidation catalyst (1) or (2). Therefore, it is clear that the NOx decomposition catalyst of the present invention showed superior denitrification ability for such exhaust gas containing no HC.

## COMPARATIVE SAMPLE 4

Transaction of exhaust model gas of lean-burn engines by NOx decomposition catalyst (4)

The dependence of HC and NOx conversion ratio and $N_2O$ production ratio on the catalyst inlet temperature was assessed in the same way as described at Comparative Sample 1 except for using a mixed gas (model gas G-3) containing 1,000 ppm of NO, 1,500 ppm of propylene as HC, 0 ppm of CO, 7.5% of $O_2$, 10% of $CO_2$, 10% of $H_2O$ and the balance being $N_2$ in place of the model gas of lean-burn engines G-1.

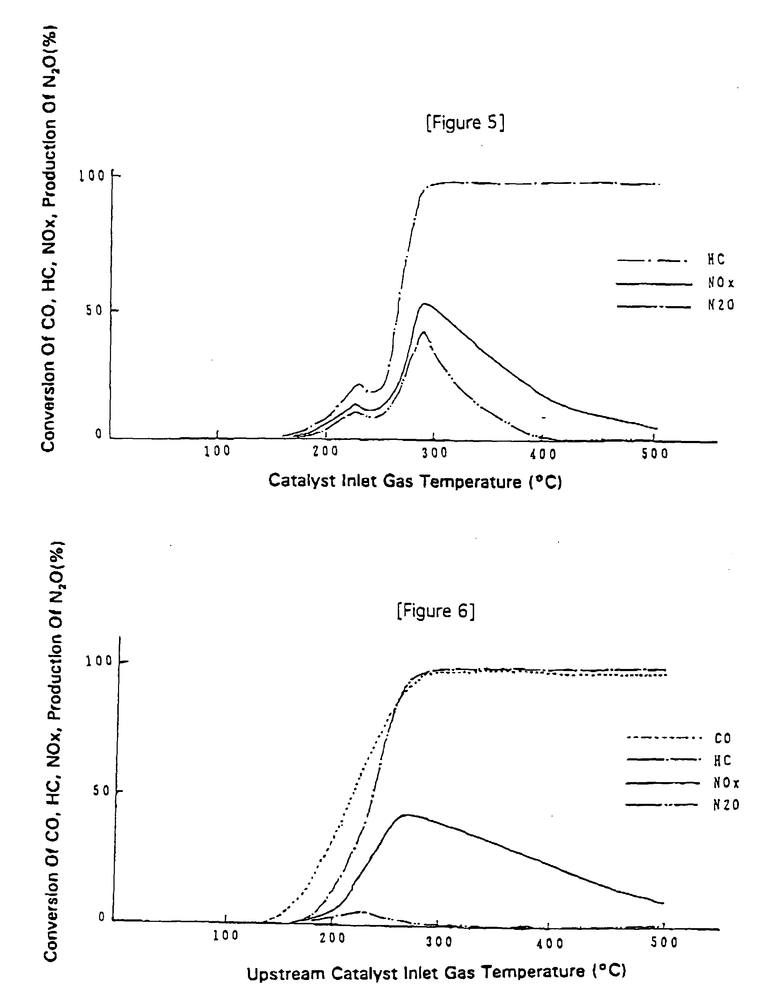

The results are shown in Figure 5 of the Drawings. The catalyst (4), which showed superior purifying ability of NOx in a non-HC system in Example 1 above, produced $N_2O$ from nearly 80% of converted NOx in the presence of considerable amounts of HC to NOx. It was clear that the catalyst (4), which predominately caused NOx decomposition reaction in a non-HC system, predominately caused a reduction reaction of NOx by HC at HC existing system rather than decomposition reaction of NOx, and on such reduction reaction of NOx by HC, NOx was not rendered harmless. Hence, it was clear that $N_2O$ production in the latter system is not controlled in the method of treating exhaust gases described in the above mentioned reports (Japanese Patent Laid-Open No. Hei 5-7737 (93/7737)), in which a CO oxidation catalyst was placed at the front step and a NOx reduction catalyst was placed at the latter step, because production of $N_2O$ is due not to the presence of CO, but rather as the result of the presence of HC.

## COMPARATIVE SAMPLE 5

Transaction of exhaust model gas of lean-burn engines by HC oxidation catalyst (1) (upstream) + NOx decomposition catalyst (4) (downstream)

NOx, CO, HC and $N_2O$ in the outlet gas of the downstream second zone catalyst layer were measured in the same way as Comparative Sample 1. The honeycomb coated with the catalyst (1) was cut in 1/3 of its length and placed upstream of gas flow in the reaction tube as described in Comparative Sample 1 above, and the honeycomb coated with the catalyst (4) was cut 2/3 length of its length and placed at the downstream of the honeycomb coated with catalyst (1), respectively, and the exhaust gas passed through the reaction tube to first contact the catalyst layer (1) and then contact to the catalyst (4). The effect of the inlet gas temperature of the upstream catalyst layer on the conversion ratio of NOx, CO, HC and $N_2O$ production ratio is shown in Figure 6 of the Drawings.

The catalysts showed high conversion ratio of CO, HC of more than 95% at higher than 280°C and also good NOx conversion ratio of more than 30% at relatively wide range of temperature from 250°C to 400°C. The catalysts also showed a $N_2O$ production ratio of less than 5% at all temperatures examined in the range of 100°C to 500°C. As can be seen upon comparison of this Example 2 with Comparative Sample 4, it is clear that placement of the HC oxidation catalyst upstream in the exhaust gases provides the ability to purify NOx. As also shown by comparison of the results of this Example 2 with Comparative Sample 1 above, it is clear that use of a NOx decomposition catalyst downstream from the first zone catalyst provides the ability to effectively purify NOx.

## EXAMPLE 2

Transaction of exhaust model gas of lean-burn engines by HC oxidation catalyst (2) (upstream) + NOx decomposition catalyst (4) (downstream)

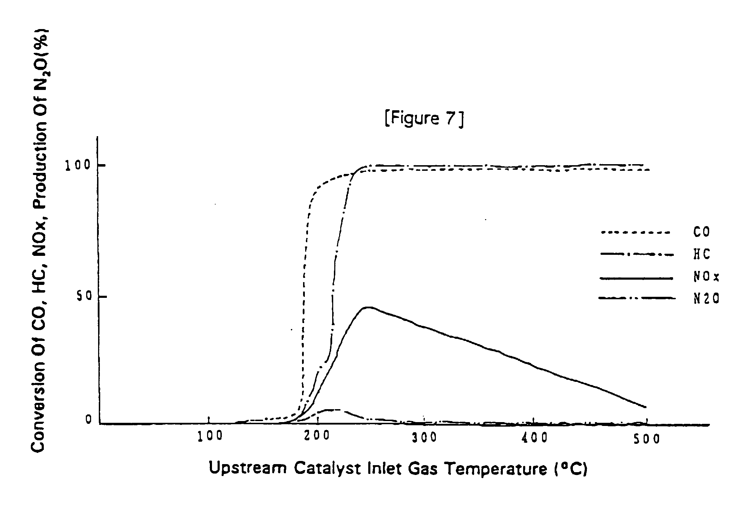

The ability of a catalyst system of the invention to purify the exhaust model gas G-1 (as such exhaust gas is identified above) was determined in the same manner as described in Comparative Sample 5 above, except the honeycomb structure coated with the catalyst (2) was used as the first zone upstream catalyst in place of the honeycomb coated with the catalyst (1) employed in Comparative Sample 5. The effect of the inlet gas temperature of the upstream catalyst layer on the conversion ratio of NOx, CO, HC and $N_2O$ production ratio is shown in Figure 7. The catalyst system showed high conversion ratio of CO, HC of more than 97% at higher than 250°C and also good NOx conversion ratio of more than 30% at wide range of temperature from 220°C to 380°C. The catalysts also showed $N_2O$ producing ratio of less than 5% throughout the temperature range of from 100°C to 500°C. As shown by comparison of the results of this Example 2 with Comparative Sample 4 above, it is clear that use of the HC oxidation catalyst upstream in the exhaust gases provides the ability to effectively purify NOx. As also shown by comparison of the results of this Example 2 with Comparative Sample 2, it is clear that use of a NOx decomposition catalyst downstream from the first zone catalyst provides the ability to effectively purify NOx.

# Claims

**Claims**

1. A two-step catalyst system for purifying exhaust gases, the gases containing a reductive component comprising hydrocarbon, nitrogen oxides and oxygen in excess of the stoichiometric amount required to perfectly oxidize all the reductive component,

    the catalyst system comprising a hydrocarbon oxidization catalyst having oxidation activity of hydrocarbons at a first zone in the flow path of the exhaust gases, and an NOx decomposition catalyst for decomposing nitrogen oxides to nitrogen and oxygen at a second zone in the flow path of the exhaust gases downstream from the first zone,

    wherein the first zone catalyst comprises gold and at least one second material selected from platinum, palladium, rhodium and iridium, loaded on a refractory porous carrier.

2. A two-step catalyst system according to claim 1 wherein the second zone catalyst is platinum loaded on refractory porous carrier.

3. A method of purifying exhaust gases, the gases comprising a reductive component comprising hydrocarbon, nitrogen oxides and oxygen in excess of the stoichiometric amount required to perfectly oxidize all the reductive component,

    the method comprising contacting the exhaust gases with hydrocarbon oxidation catalyst having oxidation activity of hydrocarbons at the first zone of the exhaust gases flow path, and thereafter contacting the exhaust gases with an Nox decomposition catalyst to decompose nitrogen oxides to nitrogen and oxygen at a second zone of the flow path downstream from the first zone,

    wherein the first zone catalyst comprises gold and at least one second material selected from platinum, palladium, rhodium and iridium, loaded on a refractory porous carrier.

4. A method according to claim 3 wherein the concentration of hydrocarbon in the exhaust gases at the inlet of the catalyst of the second zone is lower than that at the inlet of the catalyst of the first zone.

5. A method according to claim 3 or 4 wherein the second zone catalyst is platinum loaded on a refractory porous carrier.

6. A method according to any one of claims 3 to 5 wherein the NOx purification ratio is 20% or greater and the $N_2O$ production ratio is 20% or less.

**Patentansprüche**

1. Zweistufiges Katalysatorsystem zum Reinigen von Abgasen, wobei die Gase eine Reduktionskomponente enthalten, umfassend Kohlenwasserstoff, Stickstoffoxide und Sauerstoff in einer Menge von mehr als der stöchiometrischen Menge, die notwendig ist, um alle Reduktionskomponenten zu oxidieren,

    wobei das Katalysatorsystem folgendes umfaßt: einen Kohlenwasserstoff-Oxidationskatalysator mit einer Kohlenwasserstoffoxidationsaktivität in einer ersten Zone im Strömungsweg der Abgase, und einen NOx-Aufspaltungskatalysator zum Aufspalten von Stickstoffoxiden in Stickstoff und Sauerstoff in einer zweiten Zone im Strömungsweg der Abgase unterhalb der ersten Zone,
    wobei der Katalysator in der ersten Zone Gold und wenigstens ein zweites Material ausgewählt aus Platin, Palladium, Rhodium und Iridium auf einem feuerfesten porösen Träger geladen umfaßt.

2. Zweistufiges Katalysatorsystem nach Anspruch 1, bei dem der Katalysator der zweiten Zone Platin auf einem feuerfesten porösen Träger geladen ist.

3. Verfahren zum Reinigen von Abgasen, wobei die Gase eine Reduktionskomponente enthalten, umfassend Kohlenwasserstoff, Stickstoffoxide und Sauerstoff in einer Menge von mehr als der stöchiometrischen Menge, die notwendig ist, um alle Reduktionskomponenten zu oxidieren,

    wobei das Verfahren die folgenden Schritte umfaßt: In-Kontakt-Bringen der Abgase mit dem Kohlenwasserstoff-Oxidationskatalysator, der Kohlenwasserstoffoxidationsaktivität in der ersten Zone des Strömungsweges der Abgase hat, und danach In-Kontakt-Bringen der Abgase mit einem NOx-Aufspaltungskatalysator, um die Stickstoffoxide in Stickstoff und Sauerstoff in einer zweiten Zone des Strömungsweges unterhalb der ersten Zone aufzuspalten,
    wobei der Katalysator in der ersten Zone Gold und wenigstens ein zweites Material ausgewählt aus Platin, Palladium, Rhodium und Iridium auf einem feuerfesten porösen Träger geladen umfaßt.

4. Verfahren nach Anspruch 3, bei dem die Kohlenwasserstoffkonzentration in den Abgasen am Einlaß des Kastalysators der zweiten Zone geringer ist als die am Einlaß des Katalysators der ersten Zone.

5. Verfahren nach Anspruch 3 oder 4, bei dem der Katalysator der zweiten Zone Platin auf einem feuerfesten porösen Träger geladen ist.

6. Verfahren nach einem der Ansprüche 3 bis 5, bei dem das NOx-Reinigungsverhältnis 20% oder höher und das $N_2O$-Produktionsverhältnis 20% oder weniger ist.

## Revendications

1. Système de catalyseurs à deux étapes pour purifier des gaz d'échappement, les gaz contenant un composant de réduction comprenant un hydrocarbure, des oxydes d'azote et de l'oxygène en excès de la quantité stoechiométrique requise pour oxyder parfaitement tout le composant de réduction,

   le système de catalyseurs comprenant un catalyseur d'oxydation d'hydrocarbures ayant une activité d'oxydation des hydrocarbures au niveau d'une première zone dans la voie d'écoulement des gaz d'échappement, et un catalyseur de décomposition de NOx pour décomposer les oxydes d'azote en azote et en oxygène au niveau d'une deuxième zone dans la voie d'écoulement des gaz d'échappement en aval de la première zone,

   dans lequel le catalyseur de première zone comprend de l'or et au moins une deuxième matière sélectionnée à partir du platine, palladium, rhodium et iridium, chargés sur un porteur réfractaire poreux.

2. Système de catalyseurs à deux étapes selon la revendication 1 dans lequel le catalyseur de deuxième zone est du platine chargé sur un porteur réfractaire poreux.

3. Méthode de purification des gaz d'échappement, Les gaz comprenant un composant de réduction comprenant un hydrocarbure, des oxydes d'azote et de l'oxygène en excès de la quantité stoechiométrique requise pour oxyder parfaitement tout le composant de réduction,

   la méthode comprenant mettre en contact les gaz d'échappement avec le catalyseur d'oxydation d'hydrocarbures ayant une activité d'oxydation d'hydrocarbures au niveau de la première zone de la voie d'écoulement des gaz d'échappement, et ensuite mettre en contact les gaz d'échappement avec un catalyseur de décomposition de NOx pour décomposer les oxydes d'azote en azote et en oxygène au niveau d'une deuxième zone de la voie d'écoulement en aval de la première zone,

   dans laquelle le catalyseur de première zone comprend de l'or et au moins une deuxième matière sélectionnée à partir du platine, palladium, rhodium et iridium, chargés sur un porteur réfractaire poreux.

4. Méthode selon la revendication 3 dans laquelle la concentration d'hydrocarbure dans les gaz d'échappement au niveau de l'admission du catalyseur de la deuxième zone est inférieure à celle au niveau de l'admission du catalyseur de la première zone.

5. Méthode selon la revendication 3 ou 4 dans laquelle le catalyseur de deuxième zone est du platine chargé sur un porteur réfractaire poreux.

6. Méthode selon l'une quelconque des revendications 3 à 5 dans laquelle le taux de purification de NOx est de 20% ou plus et le taux de production de $N_2O$ est de 20% ou moins.

[Figure 1]

[Figure 2]

[Figure 3]

[Figure 4]

[Figure 5]

Conversion Of CO, HC, NOx, Production Of $N_2O$ (%)
Catalyst Inlet Gas Temperature (°C)

Legend:
- HC
- NOx
- N2O

[Figure 6]

Conversion Of CO, HC, NOx, Production Of $N_2O$ (%)
Upstream Catalyst Inlet Gas Temperature (°C)

Legend:
- CO
- HC
- NOx
- N2O

[Figure 7]